Europäisches Patentamt

European Patent Office

Office européen des brevets

(11) Veröffentlichungsnummer : **0 045 463**
**B1**

(12) **EUROPÄISCHE PATENTSCHRIFT**

(45) Veröffentlichungstag der Patentschrift :
18.09.85

(21) Anmeldenummer : 81105872.6

(22) Anmeldetag : 24.07.81

(51) Int. Cl.⁴ : **F 24 J 2/40**, **F 16 H 1/16**,
**G 02 B 7/18**

(54) Antriebseinheit für einen Heliostaten.

(30) Priorität : 24.07.80 DE 3027962
14.01.81 DE 3100835

(43) Veröffentlichungstag der Anmeldung :
10.02.82 Patentblatt 82/06

(45) Bekanntmachung des Hinweises auf die Patenterteilung : 18.09.85 Patentblatt 85/38

(84) Benannte Vertragsstaaten :
BE CH DE FR GB IT LI

(56) Entgegenhaltungen :
DE-B- 1 053 269
US-A- 1 938 003
US-A- 1 951 404
US-A- 2 646 720
US-A- 4 195 905

(73) Patentinhaber : Messerschmitt-Bölkow-Blohm Gesellschaft mit beschränkter Haftung
Robert-Koch-Strasse
D-8012 Ottobrunn (DE)

(72) Erfinder : Schäfer, Heinrich
Gerstengrundhöhe 9
D-3405 Rosdorf 5 (DE)
Erfinder : Ott, Karl Heinz
Rotkäppchenstrasse 93a
D-8000 München 83 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Antriebseinheit für einen Heliostaten, der aus einer feststehenden Säule sowie einer auf dieser mittels der Antriebseinheit um zwei senkrecht zueinander orientierte Achsen schwenkbar gelagerten Spiegelanordnung besteht, mit einer ersten, einer der beiden Achsen zugeordneten und koaxial zu ihr gerichteten, mit Hilfe eines ersten Schneckenradsatzes direkt angetriebenen Welle sowie einem die Schwenkbewegung um die andere Achse vermittelnden, zweiten Schneckenradsatz.

Heliostaten sind in großer Zahl in Heliostatenfeldern angeordnet und dienen dazu, solare Strahlungsenergie auf einen gemeinsamen Strahlungsempfänger zu konzentrieren. Dieser ist gewöhnlich auf einem Turm angeordnet und wird von einem aufheizbaren flüssigen oder gasförmigen Medium durchströmt. Die einzelnen Heliostaten müssen dem sich kontinuierich verändernden Sonnenstand möglichst exakt nachgeführt werden können. Dazu dienen Antriebseinheiten, die auf der feststehenden, tragenden Säule des Heliostaten angebracht sind, und mit deren Hilfe die Spiegelanordnungen um zwei Achsen, nämlich die Azimut- und die Elevationsachse, geschwenkt werden können. Aufgrund der relativ langsamen scheinbaren Sonnenbewegung werden nur kleine Winkelgeschwindigkeiten benötigt. Der Antrieb ist daher im allgemeinen mehrstufig ausgelegt, wobei dem primären Antriebsmotor eine stark untersetzende Getriebestufe nachgeschaltet ist.

Eine solche Antriebseinheit für einen Heliostaten muß bestimmte Anforderungen erfüllen. Um eine jederzeit exakte räumliche Ausrichtung der Spiegelanordnung zu gewährleisten, muß der Antrieb so spielfrei wie möglich und außerdem selbsthemmend ausgeführt sein. Dies ist vor allem dadurch bedingt, daß die Heliostaten am Aufstellungsort wechselnden Windbelastungen ausgesetzt sein können. Wäre keine Spielfreiheit vorhanden, so würden die Spiegelanordnungen in dem durch das Spiel gegebenen Ausmaß unter der wechselnden Windbelastung hin- und herschwanken. Ebenso muß Selbsthemmung gegeben sein, da die Spiegel weder unter Windbelastung noch — für den Fall unsymmetrischer Gewichtsverteilung — unter dem Einfluß des eigenen Gewichts aus einer einmal angesteuerten Stellung zurückdrehbar sein dürfen. Die exakte Nachführbarkeit der Spiegelanordnungen verlangt insbesonderere auch, daß das Umkehrspiel so gering wie möglich gehalten wird, da die Richtungsumkehr, beispielsweise bezüglich der Elevationsachse, mit der erforderlichen Exaktheit durchführbar sein muß.

Eine Antriebseinheit der eingangs genannten Art ist aus der US-A 4-195 905 bekannt. Dort ist eine heliostatenähnliche Anordnung beschrieben, die dazu dient, Spiegel oder Reflektoren um zwei senkrecht zueinander stehende Achsen zu drehen, wobei es sich einmal um eine parallel zur Rotationsachse der Erde orientierte polare Achse und zum anderen um eine senkrecht dazu gerichtete Deklinationsachse handelt. Von der der obengenannten feststehenden Säule entsprechenden Stützstruktur ausgehend, ist zunächst eine zur polaren Achse koaxiale, erste Welle gezeigt, die gegenüber der Stützstruktur mittels eines Schneckenradsatzes direkt angetrieben wird. Weiterhin ist ein zweiter Schneckenradsatz vorgesehen, der eine Drehung um die zweite Achse, die Deklinationsachse, vermittelt, jedoch geschieht dies auf konstruktiv äußerst umständliche Weise. Der zweite iSchneckenradsatz bewirkt nämlich unmittelbar lediglich eine Drehung eines zur ersten Welle koaxialen Teiles, und zwar ebenfalls um die polare Achse. Dieses Teil besitzt eine zur polaren Achse schräg gerichtete Kreisplatte, auf der wiederum ein am oberen Ende der Welle schwenkbar befestigter Kipparm rollt bzw. gleitet. Die durch den zweiten Schneckenradsatz hervorgerufene Drehung der schrägen Platte bewirkt nun erst eine Schwenkbewegung des Kipparms um die Deklinationsachse. Der Kipparm schließlich trägt die um die beiden Achsen zu schwenkende Spiegelanordnung. Diese der Schwenkung um die zweite Achse dienende Konstruktion ist ersichtlich kompliziert und aufwendig und daher störanfällig.

Aus der US-A-1 938 003 ist ein selbstjustierender Sonnenlichtreflektor bekannt, der ebenfalls um zwei zueinander senkrechte Achsen schwenkbar ist. Dabei handelt es sich einmal um eine zur Erdachse parallele Achse, um die der Spiegel, der täglichen scheinbaren Sonnenbewegung folgend, langsam rotiert, und zum anderen um eine dazu senkrechte, dem Deklinationsausgleich dienende Achse. Die Antriebseinheit für diesen Reflektor ist äußerst kompliziert und weist mehrere Schneckenradsätze sowie Kegel- und Stirnradgetriebe auf. Es ist eine im allgemeinen feststehende Säule vorhanden, die parallel zur Erdachse gerichtet ist und lediglich für eine Rückstellbewegung gedreht werden kann. Für die Drehung um die zur Erdachse parallele Achse ist eine Hohlwelle vorgesehen, die durch einen Motor über insgesamt vier hintereinandergeschaltete Schneckenradsätze angetrieben und gegenüber der feststehenden Säule gedreht wird. Die Drehung um die Deklinationsachse wird durch eine am Spiegel angreifende Stange bewirkt, die schwenkbar mit einer auf einem drehbaren Gewindestift axial beweglichen Mutter verbunden ist. Dieser Gewindestift wird seinerseits von dem Motor her über ein Kegelrad sowie ein Stirnradgetriebe und einen nachgeschalteten Schneckenradsatz angetrieben. Diese Antriebseinheit ist ersichtlich äußerst aufwendig konstruiert und daher störanfällig und wartungsintensiv.

Schließlich ist aus der DE-B-1 053 269 ein Schneckengetriebe bekannt, welches die Möglichkeit des spielarmen Eingriffs der Schnecke im Rade und auch der jeweiligen Spielnachstellung durch axiales Verschieben der Schnecke bei Abnutzung bietet, ohne daß dort ein Bezug zum Antrieb eines Heliostaten gegeben ist.

Der Erfindung liegt die Aufgabe zugrunde, eine Antriebseinheit der eingangs genannten Art bereitzustellen, die technische Einfachheit und Wirtschaftlichkeit im konstruktiven Aufbau mit hoher Funktionstüchtigkeit verbindet, und bei der insbesondere die Spielfreiheit so weitgehend wie möglich verwirklicht ist. Da die oft hohen Windbelastungen während des Betriebes von der Spiegelanordnung auf die Antriebsteile übertragen werden, wird außerdem verlangt, daß die Antriebseinheit hohe Steifigkeit aufweist.

Diese Aufgabe ist gemäß der Erfindung dadurch gelöst, daß der anderen Achse eine koaxial zu ihr orientierte, mit Hilfe des zweiten Schneckenradsatzes direkt angetriebene, zweite Welle zugeordnet ist, die in koaxialer Anordnung das fest mit ihr verbundene Schneckenrad des zweiten Schneckenradsatzes trägt, wobei beide Schneckenradsätze selbsthemmend und spieleinstellbar ausgebildet und die Schneckenwellen jeweils axial verschiebbar und axial arretierbar sind.

Demnach wird nunmehr der anderen Achse, nämlich der Elevationsachse, eine eigene koaxiale Welle zugeordnet, die von dem zweiten Schneckenradsatz direkt angetrieben wird. Diese Konstruktion zeichnet sich gegenüber den durch den Stand der Technik gegebenen Heliostat-Antriebseinheiten durch äußerste Einfachheit und somit geringe Störanfälligkeit, hohe Funktionstüchtigkeit sowie geringen Wartungsbedarf aus. Die Selbsthemmung der Schneckenradsätze kan leicht dadurch verwirklicht werden, daß die Steigung des umlaufenden Zahns der Schneckenwelle entsprechend gewählt wird. Die Spieleinstellbarkeit steht in engem Zusammenhang mit der axialen Verschiebbarkeit, wie weiter unten noch deutlicher wird. Die Aretierbarkeit kann beispielsweise dadurch gewährleistet werden, daß zu beiden Seiten des Teils der Schneckenwelle in die jeweils optimale axiale Stellung gebracht und dort arretiert werden. Diese axiale Stellung entspricht gleichzeitig derjenigen mit dem geringsmöglichen Spiel.

Die Spieleinstellbarkeit kann beispielsweise dadurch erreicht werden, daß die beiden Zahnfinken einer jeden Schneckenwelle unterschiedliche Steigungen aufweisen, so daß ein längs der Schneckenwelle hinsichtlich seiner Dicke kontinuierlich veränderliches Zahnprofil resultiert. Die Zahndicke nimmt dann längs der Schneckenwelle in Art eines Keils zu bzw. ab. Die Zahnprofile Schneckenräder müssen selbstverständig an die Ausbildung der Schneckenwellen angepaßt sein. Das Ausmaß des noch zulässigen Spiels wird dann nach dem Zusammenbau der Antriebseinheit dadurch eingestellt, daß die Schneckenwelle axial mehr oder weniger in Richtung abnehmender Zahndicke verschoben und arretiert wird. Die Spieleinstellbarkeit ist somit gegeben, ohne daß die Achsen der drehenden Getriebeteile gegeneinander bewegt werden müßten.

Es ist anzustreben, den axialen Lagerabstand der Schnekkenwellen möglichst klein zu halten, bei größtmöglichem Schneckenwellen-Durchmesser. Dadurch wird die Durchbiegung der Schneckenwelle gering gehalten und die Steifigkeit des Gesamtantriebes entsprechend erhöht.

Vorteilhafte Weiterbildungen der Erfindung sind den abhängigen Ansprüchen sowie den nachfolgenden Ausführungsbeispielen zu entnehmen.

Anhand der Abbildungen soll die Erfindung im folgenden näher erläutert werden.

Es zeigen in schematischer Darstellung

Figur 1 eine Antriebseinheit mit drehbar gelagerter Azimutwelle,

Figur 2 eine andere Ansicht der Antriebseinheit gemäß Fig. 1,

Figur 3 eine Antriebseinheit mit feststehender Azimutwelle,

Figur 4 eine andere Ansicht der Antriebseinheit gemäß Fig. 3,

Figur 5 eine weitere Antriebseinheit mit feststehender Azimutwelle und besonders kompakter Bauweise.

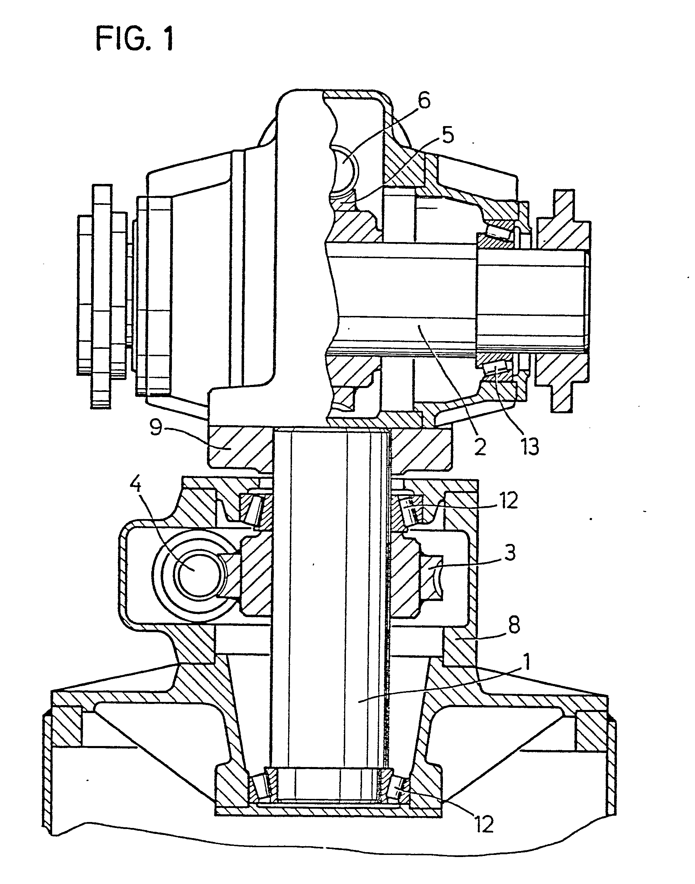

In Fig. 1 ist in Seitenansicht im Teilschnitt eine Antriebseinheit gemäß der Erfindung dargestellt. Eine der Azimutachse zugeordnete Azimutwelle 1 ist mittels Kegelrollenlagern 12 drehbar in einem fest mit der tragenden Säule verbundenen, ersten Gehäuse 8 gelagert. Koaxial mit der Azimutwelle 1 verbunden, beispielsweise durch Preßpassung, ist ein Schneckenrad 3, welches wiederum mit einer Schneckenwelle 4 im Eingriff steht. Letztere ist drehbar in dem Gehäuse 8 gelagert. Auf die Azimutwelle 1 ist ein zweites Gehäuse 9 aufgeflanscht, das eine senkrecht zur Azimutwelle orientierte, der Elevationsachse zugeordnete Elevationswelle 2 aufnimmt. Diese ist ebenfalls mittels Kegelrollenlagern 13 drehbar in ihrem Gehäuse gelagert. Mit der Elevationswelle 2 kraftschlüssig verbunden ist eine weiteres Schneckenrad 5, welches sich wiederum mit einer ihm zugeordneten Schneckenwelle 6 im Eingriff befindet. Letztere ist in dem Gehäuse 9 drehbar gelagert. Die Schneckenräder 3 und 5 sowie die Schneckenwellen 4 bzw. 6 bilden jeweils die Schneckenradsätze, die gemäß der Erfindung als Getriebeendstufen zum Antrieb der Azimut- bzw. Elevationswelle dienen.

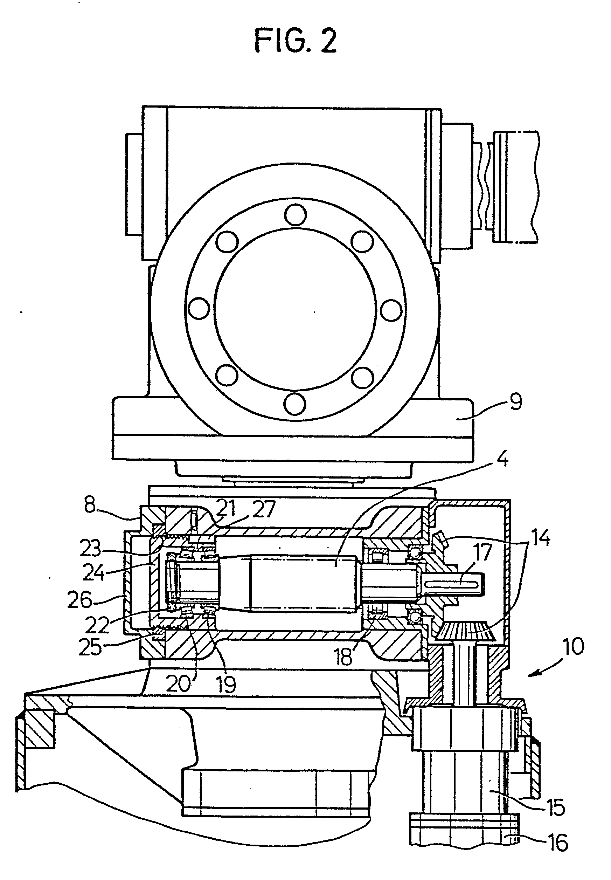

Fig. 2 zeigt eine axial um 90° gedrehte Ansicht der Antriebseinheit gemäß Fig. 1. Dabei ist ein bezüglich der Schneckenwelle 4 axialer Schnitt durch den diese Schneckenwelle umgebenden Gehäuseteil gelegt. Die Schneckenwelle 4 wird unmittelbar von einem Kegelradsatz 14 angetrieben, welcher wiederum mit einem Planetengetriebe 15 verbunden ist. Das Planetengetriebe 15, welches von einem Motor 16 angetrieben wird, stellt zusammen mit dem Kegelradsatz 14 ein Reduziergetriebe 10 dar. Die Schneckenwelle 4 ist in dem letzten Kegelrad axial gleitbar, wird aber bei Drehbewegungen durch eine in eine Nut des Kegelrades eingreifende Feder 17 mitgenommen. An ihrem einen Ende ist die Schneckenwelle 4 weiterhin in einem Rollenlager 18 axial gleitend geführt. An ihrem anderen Ende sind auf die Schneckenwelle zwei Kegelradlager 19, 20 aufgesetzt. Diese werden durch eine Nase 21 sowie eine auf das Wellenende aufgeschraubte Mutter 22 in definiertem Abstand gehalten. Die Nase 21 ist Teil einer mit Außengewinde 23 versehenen Hülse 24. Das Außengewinde 23 befindet sich im Eingriff mit einer Mutter 25, die von einer Kappe 26 in Position gehalten wird. Vor dem Aufsetzen der Kappe 26 kann durch Verdrehen der Mutter 25 die Schneckenwelle 4 axial verschoben werden. Die Hülse 24 sowie die Schneckenwelle selbst führen dabei keine Drehbewegungen aus, da eine solche durch einen von oben in eine auf der Außenseite der Hülse angebrachte Nut 27 eingreifenden Stift verhindert wird.

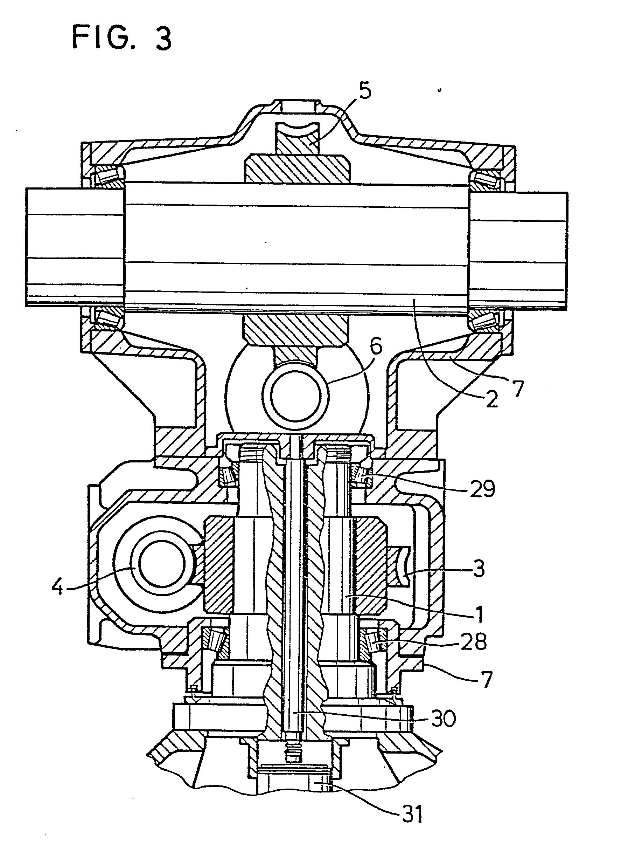

In Fig. 3 ist eine weitere Antriebseinheit gemäß der Erfindung dargestellt, die sich von der Ausführungsform der Fig. 1 und 2 zunächst dadurch unterscheidet, daß die Azimutwelle 1 selbst fest mit der tragenden Säule verbunden ist. Über Kegelrollenlager 28, 29 ist ein Gehäuse 7 drehbar auf der Azimutwelle 1 gelagert. Das Gehäuse 7 enthält einmal die der Azimutwelle zugeordnete Schneckenwelle 4, die sich im Eingriff mit dem Schneckenrad 3 befindet, welches wiederum fest und in koaxialer Anordnung mit er Azimutwelle verbunden ist. Im Gehäuse 7 sind weiterhin um gehäusefeste Achsen drehbar gelagert die Elevationsachse 2 mit dem zugeordneten Schneckenrad 5 sowie die im Eingriff mit diesem Schneckenrad befindliche Schneckenwelle 6. In eine zentrale Bohrung in der Azimutwelle 1 ist ein fest mit dem drehbaren Gehäuse 7 verbundener winkelgeber 30 eingesenkt. Die Winkellage wird von einer dafür vorgesehenen Vorrichtung 31 registriert und weiter verarbeitet.

Der Vorteil der Ausführungsform gemäß Fig. 3 liegt vor allem darin, daß die zum Betreiben der Schneckenwellen 4 und 6 vorgesehenen Motoren und Reduziergetriebe nunmehr sämtlich die Azimutdrehung mitmachen. Dies ist bei der Ausführungsform gemäß den Fig. 1 und 2 nicht der Fall, da dort die der Azimutwelle zugeordnete Schneckenwelle gegenüber der feststehenden Säule eine unveränderliche Orientierung beibehält. Die mit dieser Schneckenwelle verbundenen Antriebsaggregate können dabei unter Umständen der drehenden Spiegelanordnung im Wege sein. Bei der räumlichen Gestaltung der Spiegelanordnung muß dies berücksichtigt werden. Dieser Nachteil ist bei der Ausführungsform gemäß Fig. 3 ausgeschaltet.

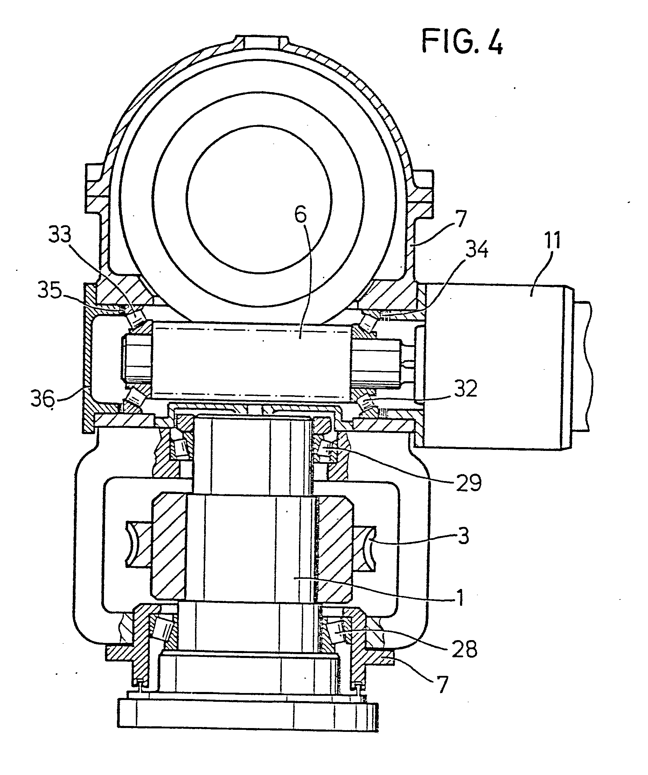

Fig. 4 gibt eine um 90° gedrehte Darstellung der Antriebseinheit gemäß Fig. 3, und zwar im axialen Teilschnitt. Die der Elevationswelle zugeordnete Schneckenwelle 6 ist in Kegelrollenlagern 32, 33 drehbar gelagert. Die Schneckenwelle wird direkt von einem Reduziergetriebe 11 angetrieben, das hier ein Planetengetriebe ist. In diesem Reduziergetriebe ist die Schneckenwelle axial gleitbar gelagert. Die Kegelrollenlager 32, 33 können Axialbewegungen der Schneckenwelle mitmachen. Deren axiale Position wird durch zwei Distanzscheibenpakete 34, 35 bestimmt. Die Schneckenwelle 6 kann unter Austausch von Distanzscheiben innerhalb eines gewissen Rahmens axial verschoben und schlielich durch Aufsetzen eine Kappe 36 arretiert werden.

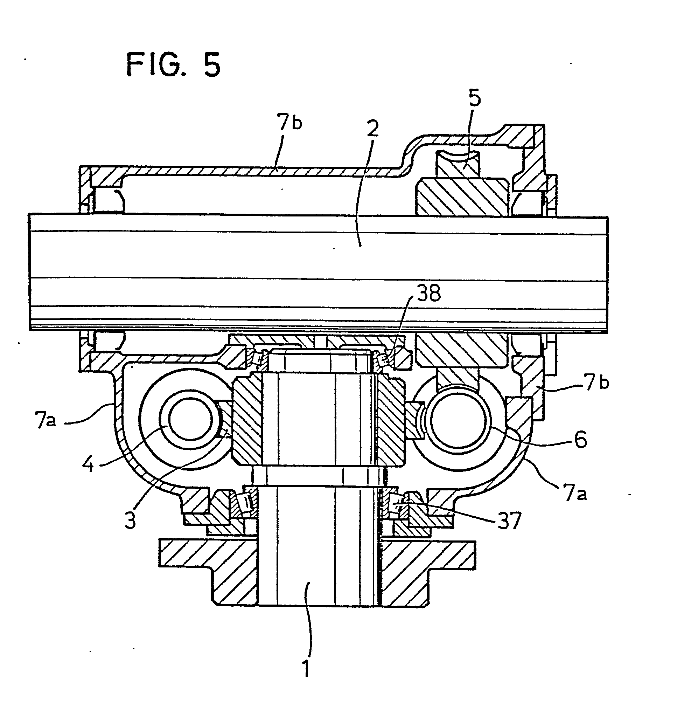

In Fig. 5 schließlich ist eine wegen ihrer günstigen räumlichen Anordnung bevorzugte Ausführungsform dargestellt. Um die fest mit der tragenden Säule verbundene Azimutwelle 1 ist ein Gehäuse 7a, 7b drehbar gelagert, und zwar mit Hilfe von Kegelrollenlagern 37, 38. Die der Azimutwelle 1 zugeordnete Schneckenwelle 4 sowie die der Elevationswelle 2 zugeordnete Schneckenwelle 6 sind zueinander parallel in einem unteren Gehäusebereich 7a drehbar gelagert. Die Elevationswelle 2 selbst liegt drehbar in einem oberen Gehäusebereich 7b. Das auf die Elevationswelle 2 aufgepaßte Schnekkenrad 5 ist mit der zugeordneten Schneckenwelle 6 in eingriff. Die Lager, in denen sich die Elevationswelle 2 drehen kann, sind nur angedeutet.

Die Antriebseinheit der Fig. 5 stellt eine äußerst kompakte und leicht montierbare Bauform dar. Auch hier ergibt sich der mit der feststehenden Azimutwelle verbundene Vorteil, daß die den beiden Schneckenwellen zugeordneten Antriebsaggregate die azimutale Drehbewegung mitmachen.

Insgesamt bietet die Erfindung die Möglichkeit einer präzisen Spieleinstellung in Verbindung mit einfacher Nachstellbarkeit des Umkehrspieles nach längerer Betriebsdauer, wobei nicht die Notwendigkeit einer Demontage des gesamten Heliostaten besteht. Es können herkömmliche Bauteile verwendet werden, und insbesondere werden keine zusätzlichen, hochpräzisen Bauteile für die vorgeschalteten Reduziergetriebe benötigt. Als Reduziergetriebe können beliebige Antriebsbausteine verwendet werden, beispielsweise Kegelradgetriebe, Stirnradgetriebe oder Planetengetriebe. Die Antriebseinheit gemäß der Erfindung zeichnet sich durch hohe Funktionstüchtigkeit, günstige Serienfertigung, einfache Wartung sowie hohe Verfügbarkeit und Lebensdauer aus.

**Patentansprüche**

1. Antriebseinheit für einen Heliostaten, der aus einer feststehenden Säule sowie einer auf dieser mittels der Antriebseinheit um zwei senkrecht zueinander orientierte Achsen (1, 2) schwenkbar gelagerten Spiegelanordnung besteht, mit einer ersten, einer der beiden Achsen zugeordneten und koaxial zu ihr gerichteten, mit Hilfe eines ersten Schneckenradsatzes (3, 4) direkt angetriebenen Welle (1) sowie einem die Schwenkbewegung um die andere Achse vermit-

telnden, zweiten Schneckenradsatz (5, 6), dadurch gekennzeichnet, daß der anderen Achse eine koaxial zu ihr orientierte, mit Hilfe des zweiten Schneckenradsatzes (5, 6) direkt angetriebene, zweite Welle (2) zugeordnet ist, die in koaxialer Anordnung das fest mit ihr verbundene Schneckenrad (5) des zweiten Schneckenradsatzes (5, 6) trägt, wobei beide Schneckenradsätze (3, 4 ; 5, 6) selbsthemmend und spieleinstellbar ausgebildet und die Schneckenwellen (4, 6) jeweils axial verschiebbar und axial arretierbar sind.

2. Antriebseinheit nach Anspruch 1, dadurch gekennzeichnet, daß die erste, als Azimutwelle (1) dienende Welle fest mit der Säule verbunden und die beiden Schneckenwellen (4, 6) sowie die als Elevationswelle (2) dienende zweite Welle drehbar in einem um die Azimutwelle (1) drehbaren Gehäuse (7) gelagert sind.

3. Antriebseinheit nach Anspruch 2, dadurch gekennzeichnet, daß die beiden Schneckenwellen (4, 6) in einem unteren Gehäusebereich (7a), vorzugsweise in einer Ebene, und die Elevationswelle (2) in einem oberen Gehäusebereich (7b) untergebracht sind.

4. Antriebseinheit nach Anspruch 1, dadurch gekennzeichnet, daß die der als Azimutwelle (1) dienenden ersten Welle zugeordnete Schneckenwelle (4) drehbar in einem fest mit der Säule verbundenen, ersten Gehäuse (8) gelagert und die Azimutwelle (1) fest mit einem zweiten Gehäuse (9) verbunden und drehbar im ersten Gehäuse (8) gelagert ist, wobei das zweite Gehäuse (9) die als Elevationswelle (2) dienende, zweite Welle sowie den zugehörigen Schneckenradsatz (5, 6) aufnimmt.

5. Antriebseinheit nach einem der vorhergehenden Ansprüche, dadurch gekennzeichnet, daß den Schneckenradsätzen (3, 4 ; 5, 6) als den Getriebeendstufen jeweils motorgetriebene Reduziergetriebe (10, 11) vorgeschaltet sind.

6. Antriebseinheit nach Anspruch 5, dadurch gekennzeichnet, daß die Reduziergetriebe (10, 11) zusammen mit den sie antreibenden Motoren an den die Schneckenwellen jeweils aufnehmenden Gehäuseteilen angeflanscht und die Schneckenwellen (4, 6) in den Reduziergetrieben axial gleitbar sind.

## Claims

1. A drive unit for a heliostat which consists of a fixed support and a mirror arrangement which is mounted on this so as to be swingable by means of the drive unit about two axes (1, 2) orientated perpendicularly to one another, with a first shaft (1) which is associated with one of the two axes and which is directed coaxially to it and which is directly driven with the aid of a first worm-wheel set (3, 4), as well as a second worm-wheel set (5, 6) which imparts the swivel motion about the other axis, characterised in that associated with the other axis is a second shaft (2) which is orientated coaxially to it and which is directly driven with the aid of the second worm-wheel set (5, 6) and which carries in coaxial arrangement the worm wheel (5), connected securely to it, of the second worm-wheel set (5, 6), in which respect both worm-wheel sets (3, 4 ; 5, 6) are designed so as to be self-locking and play-adjustable and the worm shafts (4, 6) are respectively axially displaceable and axially lockable.

2. A drive unit according to claim 1, characterised in that the first shaft serving as azimuth shaft (1) is connected securely to the support, and the two worm shafts (4, 6) as well as the second shaft serving as elevation shaft (2) are monted rotatably in a housing (7) which is rotatable about the azimuth shaft (1).

3. A drive unit according to claim 2, characterised in that the two worm shafts (4, 6) are accommodated in a lower housing region (7a), preferably in one plane, and the elevation shaft (2) is accommodated in an upper housing region (7 b).

4. A drive unit according to claim 1, characterised in that the worm shaft (4) associated with the first shaft serving as azimuth shaft (1) is mounted rotatably in a first housing (8) connected securely to the support and the azimuth shaft (1) is connected securely to a second housing (9) and is mounted rotatably in the first housing (8), in which respect the second housing (9) receives the second shaft serving as elevation shaft (2) as well as the appertaining worm-wheel set (5, 6).

5. A drive unit according to one of the preceding claims, characterized in that connected prior to the worm-wheel sets (3, 4 ; 5, 6) as the gear end stages are respectively motor-driven reducing gears (10, 11).

6. A drive unit according to claim 5, characterised in that the reducing gears (10, 11) together with the motors driving them are flange-mounted on the housing parts respectively receiving the worm shafts and the worm shafts (4, 6) are axially slidable in the reducing gears.

## Revendications

1. Unité d'entraînement pour un héliostat qui est constitué par une colonne fixe ainsi que par un système de miroir monté sur celle-ci de façon à pouvoir pivoter au moyen de l'unité d'entraînement autour de deux axes (1, 2) orientés perpendiculairement l'un par rapport à l'autre, comprenant un premier arbre (1) associé à l'un des deux axes, dirigé coaxialement à celui-ci et entraîné directement à l'aide d'un premier jeu de roues à dentures hélicoïdale (3, 4) ainsi qu'un second jeu de roues à denture hélicoïdale (5, 6) transmettant le mouvement de pivotement autour de l'autre axe, caractérisé par le fait qu'à l'autre axe est associé un second arbre (2) qui, orienté coaxialement à celuíci et entraîné directement à l'aide du second jeu de roues à denture hélicoïdale (5, 6), porte, disposée coaxialement, la roue à denture hélicoïdale (5) qui lui est solidaire du second jeu de roues à denture hélicoïdale (5,6), les deux jeux de roues à denture hélicoïdale (3, 4 ; 5, 6) étant réalisés à autoblocage et à rattrapage de jeu et les arbres à vis sans fin (4, 6) étant respectivement déplaçables axialement et arrêtables axialement.

2. Unité d'entraînement selon la revendication 1, caractérisé par le fait que le premier arbre, servant d'arbre d'azimut (1), est solidaire de la colonne et les deux arbres à vis sans fin (4, 6) ainsi que le second arbre, servant d'arbre d'élévation (2), sont montés rotatifs dans un carter (7) mobile en rotation autour de l'arbre d'azimut (1).

3. Unité d'entraînement selon la revendication 2, caractérisée par le fait que les deux arbres à vis sans fin (4, 6) sont logés dans une zone inférieure (7a) du carter, de préférence dans un même plan, et l'arbre d'élévation (2) dans une zone supérieure (7b) du carter.

4. Unité d'entraînement selon la revendication 1, caractérisée par le fait que l'arbre à vis sans fin (4), associé au premier arbre servant d'arbre d'azimut (1), est monté rotatif dans un premier carter (8) solidaire de la colonne et l'arbre d'azimut (1) est solidaire d'un second carter (9) et monté rotatif dans le premier carter (8), le second carter (9) recevant le second arbre, servant d'arbre d'élévation (2), ainsi que le jeu de roues à denture hélicoïdale (5, 6) correspondant.

5. Unité d'entraînement selon l'une des revendications précédentes, caractérisée par le fait qu'en amont des jeux de roues à denture hélicoïdale (3, 4 ; 5, 6) en tant qu'étages de transmission finals sont montés des trains réducteurs (10, 11) respectivement entraînés par moteur.

6. Unité d'entraînement selon la revendication 5, caractérisée par le fait que les trains réducteurs (10, 11) en liaison avec les moteurs les entraînant sont fixés par bride sur des parties du carter recevant respectivement les arbres à vis sans fin et les arbres à vis sans fin (4, 6) peuvent glisser axialement dans les trains réducteurs.

FIG. 1

# FIG. 2

# FIG. 3

FIG. 4

# FIG. 5